# EUROPÄISCHE PATENTSCHRIFT

(11) **EP 2 435 275 B1**
(45) Veröffentlichungstag und Bekanntmachung des Hinweises auf die Patenterteilung: **16.01.2013**
(21) Anmeldenummer: 10720778.9
(22) Anmeldetag: 20.05.2010
(51) Int. Cl.: B60Q 1/14

(54) **VERFAHREN UND VORRICHTUNG ZUR FAHRZEUG GESTÜTZTEN BELEUCHTUNG BEI UNZUREICHEND BELEUCHTETEN VERKEHRSUMGEBUNGEN**
METHOD AND DEVICE FOR VEHICLE-BASED ILLUMINATION IN INSUFFICIENTLY ILLUMINATED TRAFFIC ENVIRONMENTS
PROCÉDÉ ET DISPOSITIF D'ÉCLAIRAGE ASSISTÉ D'UN VÉHICULE POUR DES ENVIRONNEMENTS DE CIRCULATION INSUFFISAMMENT ÉCLAIRÉS

(30) Priorität: 29.05.2009 DE 102009026571
(43) Veröffentlichungstag der Anmeldung: 04.04.2012
(73) Patentinhaber: Robert Bosch GmbH, 70442 Stuttgart (DE)
(72) Erfinder: EHLGEN, Tobias, Tuebingen 72076 (DE)
(86) Internationale Anmeldenummer: PCT/EP2010/056960
(87) Internationale Veröffentlichungsnummer: WO 2010/136380

(56) Entgegenhaltungen:
- DE-A1-102006 039 182
- DE-A1-102007 040 042
- DE-A1-102007 049 637

## Beschreibung

### Stand der Technik

Die Erfindung betrifft die Scheinwerfersteuerung in Fahrzeugen. Es ist bekannt, Fahrzeuge mit Scheinwerfern auszustatten, um eine Beleuchtung in dunkler Umgebung zu ermöglichen. Multifunktionskameras (MPCs, multi-purpose camera) unterstützen den Fahrer durch Erfassung von Strukturen der Verkehrsumgebung, beispielsweise durch Erfassung der Spur. Abhängig von dem Erfassten können die Kameras den Wechsel zwischen Abblend- und Fernlicht steuern, wobei beispielsweise bei der Erfassung eines entgegenkommenden Fahrzeugs das Fernlicht zur Vermeidung von Blendung abgeschaltet wird. Ferner ist bekannt, Licht im Infrarotbereich zur Ausleuchtung zu verwenden, da das menschliche Auge durch Infrarotlicht nicht geblendet wird, jedoch elektronische Kameras üblicherweise eine Umgebung erfassen können, die mit Infrarotlicht beleuchtet ist.

Die Druckschrift JP-2006176020-A beschreibt einen Mechanismus, der dazu dient, andere Verkehrsteilnehmer vor Blendungen zu schützen, indem mittels einer Kamera ein kritischer Bereich (in dem sich beispielsweise ein Fußgänger befindet) erfasst wird. Die Position des kritischen Objekts (des Fußgängers) wird angezeigt und gegebenenfalls wird nach Erfassung der Richtung ein betreffender Scheinwerfer abgeschaltet, der in diese Richtung abstrahlt. Somit wird die Sichtverteilung durch durchgehendes Abschalten eines betreffenden Scheinwerfers, der in eine kritische Richtung leuchtet, an die vorherrschende Verkehrssituation und insbesondere an bestehende kritische Objekte angepasst. DE 10 2007 040 042 A1 bezieht sich auf ein System zur Erzeugung eines Lichtbündels im Vorfeld eines Kraftfahrzeuges. Das System umfasst einen Scheinwerfer, der mindestens ein LED Array aus mehreren, separat elektrisch ansteuerbaren Leuchtdioden umfasst. Des Weiteren ist eine Objektdetektionseinrichtung zum Detektieren von Objekten im Umfeld des Kraftfahrzeugs vorgesehen, ferner eine Positionsbestimmungseinrichtung zur Bestimmung der Position eines erkannten Objekts relativ zum Kraftfahrzeug. Das von dem LED Array in Verbindung mit einem optischen Abbildungssystem erzeugte Lichtbündel ist durch zumindest eine horizontale Beleuchtungsstärkeverteilung charakterisierbar, bei dem die Beiträge von mindestens zwei LEDs zur Beleuchtungsstärkeverteilung zumindest horizontal winkelmäßig überlappen, wobei die Beleuchtungsstärke jeweils für verschiedene Positionen vor dem Kraftfahrzeug und verschiedene horizontale Winkel relativ zu einer Referenzrichtung definierbar ist. Für ein detektiertes Objekt wird dann jeweils in Abhängigkeit von der Position des Objekts zum Kraftfahrzeug und in Abhängigkeit einer angenommenen oder ermittelten Objektbreite ein blendungskritischer Horizontalwinkelbereich ermittelt sowie einzelne LEDs unter Berücksichtigung der horizontal winkelmäßigen Überlappung ihrer Beiträge zur Beleuchtungsstärkeverteilung angesteuert.

Die Druckschrift DE 197 138 44 A1 beschreibt ein Verfahren zur Regulierung der Leuchtweite von Scheinwerfern, um diese vorausschauend an die Anforderungen für die Ausleuchtung der Fahrbahn anzupassen. Gemäß einer erfassten Verkehrssituation werden die Scheinwerfer in eine Kurve hinein geneigt. Zudem wird beschrieben, dass die Leuchtweite reduziert wird, wenn ein vorausfahrendes Fahrzeug detektiert wird.

Somit wird gemäß dem Stand der Technik bei Erfassen eines kritischen Objekts (vorausfahrendes Fahrzeug, Fußgänger) das Objekt von der direkten Bestrahlung ausgenommen, indem die Beleuchtungsrichtung verändert wird. Aufgrund der geringen Anzahl an verschiedenen, zu wählenden Ausleuchtrichtungen eines üblichen Scheinwerfers (bsp. Abblendlicht oder Fernlicht) wird somit nicht nur speziell der Abschnitt ausgeblendet, in dem sich ein kritisches Objekt befindet, sondern ein gesamter Ausleuchtungsbereich wird dauerhaft abgeschaltet. Dadurch wird das vom Fahrer zu erfassende beleuchtete Sichtfeld deutlich verringert, um der Verkehrsumgebung und insbesondere kritischen Objekten in der Verkehrsumgebung Rechnung zu tragen. Jedoch sind gerade die Bildabschnitte, in denen sich kritische Objekte befinden, von besonderer Bedeutung für den Fahrer.

Es ist daher eine Aufgabe der Erfindung, einen Mechanismus vorzusehen, mit dem sich eine Verkehrsumgebung adaptiv beleuchten lässt, mit dem zum einen das Blenden von anderen Verkehrsteilnehmern verhindert wird, und zum anderen auch bei der Adaption der Beleuchtung die gesamte Verkehrsumgebung noch ausreichend erfasst werden kann.

### Offenbarung der Erfindung

### Offenbarung der Erfindung

Mittels des erfindungsgemäßen Verfahrens und der erfindungsgemäßen Vorrichtung kann eine fahrzeuggestützte Beleuchtung vor Verkehrsumgebungen an erfasste kritische Objekte angepasst werden, um Verkehrsteilnehmer vor Blendungen zu schützen, ohne dass die Erfassung der gesamten Verkehrsumgebung verschlechtert wird. Insbesondere lässt sich die Erfindung durch bereits existierende kostengünstige Systeme umsetzen. Darüber hinaus werden kritische Objekte, die vor Blendung zu schützen sind, auch nach Adaption der Beleuchtung vollständig und beleuchtet erfasst, ohne dass die Gefahr einer Blendung besteht.

Der Erfindung liegt das Konzept zugrunde, dass die Blendungsgefahr stark minimiert wird, indem die Umgebung nur für kurze AN-Perioden beleuchtet wird, um die Verkehrsumgebung nach wie vor ausleuchten zu können, wobei gleichzeitig eine Blendung verhindert wird, indem der für die Blendung eines menschlichen Auges relevante Intensitäts-Mittelwert deutlich verringert wird. Um die Beleuchtung während der AN-Perioden für das menschliche Auge nutzen zu können, wird eine Kamera verwendet, welche während der AN-Periode ein Bild erfasst (durch die hohe Intensität während der AN-Periode können die Verschluss-Zeiten sehr kurz sein), wobei das erfasste Kamerabild dem Fahrer zur Orientierung angezeigt werden kann. Hierbei kann entweder das erfasste Kamerabild selbst angezeigt werden, oder lediglich Symbole, beispielsweise ein Kreis, der die Position relevanter Objekte wiedergibt. In diesem Kontext bedeuten relevante Objekte sowohl Verkehrszeichen oder der Verlauf der Fahrbahn, als auch andere Verkehrsteilnehmer. Die Erfindung nutzt somit das Prinzip, dass das menschliche Auge Helligkeit mit einer gewissen Trägheit aufnimmt und somit hohe Momentanintensitäten nicht blenden, wenn die AN-Periode des Lichts im Vergleich zur Trägheit des menschlichen Auges ausreichend kurz ist und die zeitlich gemittelte Intensität deutlich geringer ist. Das Verhalten einer elektronische Kamera unterscheidet sich von dem menschlichen Auge dadurch, dass auch kurze Lichtblitze, die zum Ausleuchten verwendet werden, eine ausreichende Beleuchtung darstellen und ein Bild erfasst werden kann, wenn eine Verschlusszeit oder Bilderfassungszeit verwendet wird, die im Vergleich zur Trägheit des menschlichen Auges sehr kurz ist. Der Zeitpunkt der Bildaufnahme ist somit mit der getakteten Beleuchtung synchronisiert und ein Bild wird bevorzugt in der AN-Periode aufgenommen, während der die Lichtquelle Licht erzeugt, d.h. mit Strom versorgt ist. Als Lichtquellen eignen sich alle elektrischen Lichtquellen mit geringer Trägheit. Während Lichtquellen basierend auf Glühwedeln durch den nachglühenden Draht weniger geeignet sind, nur während kurzer AN-Perioden Licht zu erzeugen, sind insbesondere LED-Leuchtquellen zum Erzeugen einer getakteten Beleuchtung mit klar definierten AN- und AUS-Perioden zur Umsetzung der Erfindung geeignet.

Das erfindungsgemäße Verfahren zur fahrzeuggestützten Beleuchtung von Verkehrsumgebungen umfasst daher das Erzeugen von Licht mittels mindestens einer Lichtquelle, das von einem Fahrzeug in eine Verkehrsumgebung eingestrahlt wird. Die Lichtquellen sind somit, relativ zum Fahrzeug betrachtet, nach vorne oder auch nach hinten ausgerichtet. Das Licht wird unterbrochen in die Verkehrsumgebung eingestrahlt gemäß AN-Perioden und AUS-Perioden. Vorzugsweise wird zwischen den Perioden mit einer Frequenz gewechselt, die über 15, 20, 25 oder über 50 Hz liegt, so dass das menschliche Auge die Abfolge von AN- und AUS-Perioden nicht oder nur geringfügig als Flackern wahrnimmt. Insbesondere kann die Umschaltfrequenz 50 Hz oder 100 Hz betragen, wobei eine derartige Frequenz von LED-Lichtquellen umgesetzt werden kann, ohne dass durch Nachtleuchteffekte die AN-Periode verlängert wird, wobei gleichzeitig die Lichtquellen eine geringe Trägheit haben, so dass die Helligkeit zu Beginn der AN-Periode mit einer geeigneten hohen Anstiegsrate ansteigt.

Während der AUS-Periode wird von der Lichtquelle in die Verkehrsumgebung bzw. in einen Sektor der Verkehrsumgebung kein Licht eingestrahlt, um ein Blenden zu verhindern. Während der AN-Periode wird in der Verkehrsumgebung im Wesentlichen in die selbe Verkehrsumgebung, d.h. in den selben Sektor, eingestrahlt. Die AN-Periode wird zur Aufnahme eines Bildes verwendet, wobei gleichzeitig die Länge der AN-Periode gewährleistet, dass ein menschliches Auge nicht geblendet wird. Ein Bild (oder auch mehrere Bilder) der Verkehrsumgebung und des während der AN-Periode ausgeleuchteten Sektors wird während der AN-Periode aufgenommen. Das Aufnehmen des Bildes beginnt mit der AN-Periode und endet mit derselben AN-Periode. Alternativ beginnt das Aufnehmen des Bildes mit der AN-Periode und endet innerhalb derselben AN-Periode. Erfindungsgemäß beginnt das Aufnehmen des Bildes innerhalb der AN-Periode und endet mit oder innerhalb derselben AN-Periode. Alternativ kann das Aufnehmen des Bildes auch vor der AN-Periode beginnen, soweit die Periode, in der das Bild aufgenommen wird, sich zumindest teilweise mit der AN-Periode überlappt. Hierzu kann eine Kamera mit einer entsprechenden Verschlusszeit vorgesehen werden, wobei insbesondere elektronische Kameras die Aufnahmeperiode, während der das Bild erfasst wird, durch Auslesen eines elektronischen Bildsensors definieren. Die Aufnahme des Bildes entspricht bei elektronischen Kameras somit einer Aufnahme-Zeitperiode, während der die Bildpunkte eines Bildsensors ausgelesen werden. Diese Aufnahmeperiode ist synchronisiert mit der AN-Periode und überlappt zumindest teilweise mit der AN-Periode.

Die erfindungsgemäße Beleuchtung mit reduzierter gemittelter Intensität wird dann vorgesehen, wenn ein kritisches Objekt erfasst wird. Wenn kein kritisches Objekt erfasst wird, bestehen vorzugsweise nur AN-Perioden.

Das Licht wird über die AN- und AUS-Perioden mit einem Intensitäts-Mittelwert abgestrahlt, der geringer als die Intensität während der AN-Periode ist. Durch diese Maßnahme, in Kombination mit der Trägheit des menschlichen Auges, wird eine Blendung verhindert. Der Intensitäts-Mittelwert über die AN- und AUS-Perioden ist vorzugsweise nicht größer als 10 %, 5 %, 2 %, 1 %, 1%, 0,1 ‰ oder 0,01 ‰ der Intensität bzw. des Intensitäts-Mittelwerts während einer AN-Periode. Ferner erfasst erfindungsgemäß das Erzeugen von Licht mit reduzierter gemittelter Helligkeit das Betreiben einer elektrischen Lichtquelle getaktet gemäß einem Rechtecksignal oder gemäß einem anderen Impulssignal, das die AN-Periode und die AUS-Periode definiert. Die AN-Periode ist durch eine Signalstärke definiert, die höher als ein vorbestimmter Wert ist, wobei die AUS-Periode durch einen Signalwert definiert ist, der unter dem vorbestimmten Wert liegt. Vorzugsweise ist die Lichterzeugung, die durch das Signal gesteuert ist, während der AUS-Periode im Wesentlichen 0 und beträgt während der AN-Periode im Wesentlichen 100 % oder insbesondere > 90 % eines Normwerts, der die Norm-Intensität der Lichtquelle wiedergibt. Das Steuersignal, demgemäß die Lichtquelle an- und ausgeschaltet wird, wird mit einem Tastverhältnis vorgesehen, das nicht größer als 10 %, 5 %, 2 %, 1 %, 1‰, 0,1 ‰ oder 0,01 ist. Das Tastverhältnis ist somit deutlich kleiner als 1 und betrifft die Länge der AN-Periode im Verhältnis zu der Summe aus AN-Periode und AUS-Periode. Gleichermaßen kann das Tastverhältnis definiert werden durch Verhältnis des Integrals der Lichterzeugungsintensität oder des Signalwerts über die AN-Periode im Verhältnis zum Integral des Intensitäts- oder Signalwerts über die AN- und die AUS-Periode bzw. über den gesamten Zeitverlauf, während dessen in erfindungsgemäßer Weise Licht erzeugt wird.

Um den gewünschten Mittlungseffekt durch die Trägheit des menschlichen Auges zu erreichen, der eine Blendung verhindert, folgen die AN-Periode und die AUS-Periode in schnellem zeitlichem Wechsel. Der Wechsel kann wie oben bemerkt durch eine Frequenz wiedergegeben werden. Alternativ wird eine AN-Periode definiert, mit einer Länge von nicht mehr als 200 ms, 100 ms, 50 ms, 20 ms, 10 ms, 5 ms, 1 ms, 200 µs, 100 µs, 50 µs oder 30 µs. Um die Momentanintensität deutlich geringer als die zeitliche gemittelte Intensität vorzusehen, beträgt die AUS-Periode ein Vielfaches N der AN-Periode. N ist vorzugsweise ≥ 10, ≥ 20, ≥ 50, ≥ 100, ≥ 1000, ≥10000 oder ≥ 100000. Um ein für das menschliche Auge störendes Flackern zu vermeiden, wechseln sich die AN-Perioden und die AUS-Perioden mit einer Frequenz von ≥ 20 Hz ab, wobei die AN-Periode nicht länger als 25 µs andauert. Dadurch ergibt sich ein Verhältnis des Intensitäts-Mittelwerts zur Momentanintensität während der AN-Periode von < 50 %. Zur Bilderfassung kann daher eine Intensität von 100 % verwendet werden, wohingegen das menschliche Auge mit einer Intensität von 50 % konfrontiert wird, wodurch der Blendungseffekt deutlich reduziert wird. Vorzugsweise beträgt das Verhältnis von Intensitäts-Mittelwert zu Momentanintensität weniger als 25 %, weniger als 10 %, weniger als 5 %, weniger als 1 %, weniger als 1 ‰ oder weniger als 0,01‰. Das Tastverhältnis entspricht dem Verhältnis von zeitlichem Intensitäts-Mittelwert zu Momentanintensität während der AN-Periode, und umgekehrt. Ferner kann der Intensitäts-Mittelwert während der AN-Periode mit der Momentanintensität während der AN-Periode gleichgesetzt werden, und umgekehrt.

Gemäß einem weiteren Aspekt der Erfindung werden mehrere Lichtquellen verwendet, die in verschiedene Richtungen ausgerichtet sind, wobei die Lichtquellen einzeln gemäß der Erfindung betrieben werden, wenn ein kritisches Objekt in dem Ausleuchtungskegel bzw. in der entsprechenden Beleuchtungsrichtung einer betreffenden Lichtquelle vorliegt. In der AUS-Periode erzeugt eine der Lichtquellen, die in eine bestimmte Richtung ausgerichtet ist, kein Licht, wobei während der AUS-Periode mindestens einer dazu verschiedenen zweiten Lichtquelle, die in einer anderen Richtung ausgerichtet ist, Licht erzeugt. In der AN-Periode erzeugt die mindestens eine erste als auch die mindestens eine zweite Lichtquelle Licht. Vorzugsweise werden nur die Lichtquellen bzw. die Lichtquelle während der AUS-Periode auch ausgeschaltet, wenn in der betreffenden Richtung ein Objekt vorliegt, das der Gefahr der Blendung ausgesetzt ist, beispielsweise ein Fußgänger oder ein Fahrzeug.

Ferner umfasst das erfindungsgemäße Verfahren den Schritt des Erfassens einer kritischen Richtung, in der ein lichtempfindliches Objekt in der Verkehrsumgebung vorliegt. Lichtempfindlich bedeutet in diesem Kontext, dass das Objekt eine Blendung erfährt, wenn es mit Licht zu hoher Intensität beleuchtet wird. Dies betrifft insbesondere Objekte wie Fahrzeuge oder Fußgänger, wobei der Fahrer bzw. der Fußgänger von der Lichtquelle geblendet werden kann, wenn diese eine zu hohe, zeitlich gemittelte Intensität abstrahlt. Erfindungsgemäß wird der kritischen Richtung mindestens eine Lichtquelle zugeordnet. Dies wird insbesondere dadurch vorgesehen, dass verschiedene Lichtquellen in verschiedene Abstrahlrichtungen ausgerichtet sind. Die Abstrahlungsrichtung wird durch die Befestigung bzw. Halterung der Lichtquelle definiert, so dass sich die einzelnen Lichtkegelrichtungen den zugehörigen Lichtquellen einfach zuordnen lassen. Die Zuordnung wird daher vorgesehen durch die Befestigung der Lichtquelle bzw. durch deren Ausrichtung, insbesondere, wenn die Lichtquelle in einer beweglichen Lagerung befestigt ist. Während der AUS-Periode wird die mindestens eine Lichtquelle ausgeschaltet, die in der kritischen Richtung liegt. Andere Lichtquellen, die nicht in der kritischen Richtung ausgerichtet sind, bleiben während der AUS-Periode eingeschaltet. Die AUS-Periode betrifft daher nur diejenigen Lichtquellen, welche in eine kritische Richtung bzw. auf ein lichtempfindliches Objekt in der Verkehrsumgebung strahlen. Neben der Befestigung, die die Abstrahlrichtung einer spezifischen Lichtquelle definiert, beeinflusst auch die Optik, welche gegebenenfalls beweglich ist, die Abstrahlrichtung der Lichtquelle, wenn die Optik zur Definition des Strahlengangs der entsprechenden Lichtquelle verwendet wird. -

Die Erfindung wird ferner von einer Vorrichtung zur fahrzeuggeschützten Beleuchtung von Verkehrsumgebungen umgesetzt, wobei die Vorrichtung umfasst: mindestens eine Fahrzeug-Lichtquelle, die in eine Verkehrsumgebung gerichtet ist, und in diese hineinstrahlt. Ferner umfasst die Vorrichtung mindestens einen Taktgenerator, der die Fahrzeug-Lichtquelle versorgt, wobei der Taktgenerator die Fahrzeug-Lichtquelle unterbrochen gemäß einer AN-Periode und einer AUS-Periode mit elektrischem Strom versorgt. Der Taktgenerator kann beispielsweise von einem Mikroprozessor vorgesehen sein, der einen Leistungsschalter (vorzugsweise auf Halbleiterbasis) steuert, und hierzu mit diesem verbunden ist. Der Leistungsschalter ist in dem Stromkreis vorgesehen, der die Lichtquelle mit Strom versorgt. Der Taktgenerator versorgt die Fahrzeug-Lichtquelle unterbrochen gemäß einer AN-Periode und einer AUS-Periode mit elektrischem Strom. Die Versorgung kann unmittelbar über den Taktgenerator vorgesehen sein, der einen zur Lichterzeugung erforderlichen Strom vorsieht, oder kann von einem Stromkreis vorgesehen werden, der die Lichtquelle mit Strom versorgt, und der gemäß dem Taktgenerator den Stromfluss steuert. Die Vorrichtung umfasst ferner eine Bildaufnahmevorrichtung, beispielsweise eine elektronische Kamera, die mittelbar oder unmittelbar mit dem Generator verbunden ist und die eingerichtet ist, Bilder der Verkehrsumgebung während der AN-Periode aufzunehmen, wie es bereits anhand des erfindungsgemäßen Verfahrens beschrieben ist. Die Dauer der AN-Periode ist in Vergleich zur Trägheit des menschlichen Auges kurz genug, um eine Blendung zu vermeiden. Um zu gewährleisten, dass die Bilderfassung mit der AN-Periode-Lichtquelle synchronisiert ist, wie oben anhand des erfindungsgemäßen Verfahrens beschrieben ist, umfasst die erfindungsgemäße Vorrichtung eine Synchronisiervorrichtung, die ein Bildaufnahme-Trägersignal mit dem Beginn der AN-Periode oder um eine vorbestimmte Verzögerung dazu versetzt an die daran angeschlossene Bildaufnahmevorrichtung abgibt. Die Bildaufnahmevorrichtung ist somit mit der Synchronisiervorrichtung über eine Datenleitung verbunden, über die das Trägersignal übertragen wird. Ferner kann die Synchronisiervorrichtung auch eingerichtet sein, um eine vorbestimmte Zeitdauer vor der AN-Periode das Trägersignal an die Bildaufnahmevorrichtung abzugeben. Die Synchronisiervorrichtung ist ferner zur Erfassung der AN-Periode mit dem Taktgenerator verbunden. Gemäß einer alternativen Ausführungsform gibt der Taktgenerator selbst an die Bildaufnahmevorrichtung ab, wobei die Synchronisiervorrichtung in diesem Fall von dem Taktgenerator selbst und von der Verbindung zwischen Taktgenerator und Bildaufnahmevorrichtung vorgesehen wird. Die Bildaufnahmevorrichtung umfasst einen Trägersignaleingang, über den das Trägersignal empfangen wird, und mit dem sich der Auslösezeitpunkt bzw. der Bilderfassungszeitpunkt der Bildaufnahmevorrichtung steuern lässt.

Die erfindungsgemäße Vorrichtung umfasst ferner eine Objekterkennungsvorrichtung, die mit der Bildaufnahmevorrichtung verbunden ist. Die Objekterkennungsvorrichtung ist eingerichtet, Objekte, insbesondere lichtempfindliche Objekte in dem Bild zu erfassen, das von der Bildaufnahmevorrichtung vorgesehen wird. Ferner ist die Objekterkennungsvorrichtung (oder eine andere Zuordnungsvorrichtung der erfindungsgemäßen Vorrichtung) eingerichtet, die Objekte kritischen Richtungen zuzuordnen. Kritische Richtungen werden durch die Ausrichtung der mindestens einen Fahrzeug-Lichtquelle definiert. Die Objekte werden vorzugsweise durch die Objekterkennungsvorrichtung klassifiziert und beispielsweise eingeteilt in nicht-lichtempfindliche Objekte wie Verkehrszeichen oder Fahrbahnmerkmale, und lichtempfindliche Objekte wie Menschen oder Fahrzeuge. Die Einteilung kann beispielsweise anhand der Kontur der erfassten Objekte vorgenommen werden. Die Objekterkennungsvorrichtung ordnet kritische Richtungen vorzugsweise einer Vielzahl von in verschiedene Richtungen ausgerichtete Fahrzeug-Lichtquellen zu, wobei die Fahrzeug-Lichtquellen Teil der Vorrichtung sind. Der Taktgenerator ist eingerichtet, diejenige oder diejenigen Fahrzeug-Lichtquelle bzw. Fahrzeug-Lichtquellen, welche in die kritische Richtung oder in die kritischen Richtungen ausgerichtet sind, während der AUS-Periode nicht mit Strom zu versorgen. Allerdings wird diejenige Fahrzeug-Lichtquelle oder diejenigen Fahrzeug-Lichtquellen, welche nicht in die kritische Richtung ausgerichtet sind, während der AUS-Periode weiterhin mit Strom versorgt. Der Taktgenerator ist somit mit der Objekterkennungsvorrichtung verbunden und eingerichtet, für mehrere Fahrzeug-Lichtquellen verschiedene Signale vorzusehen, um die Lichtquellen während der AUS-Periode nicht mit Strom zu versorgen, welche in die kritische Richtung ausgerichtet sind.

Die Fahrzeug-Lichtquelle umfasst einen LED-Scheinwerfer mit genau einem Stromversorgungsanschluss, der mit dem Taktgenerator oder mit einem Stromkreis, der von dem Taktgenerator gesteuert wird, verbunden ist. Die Fahrzeug-Lichtquelle kann ebenso eine Vielzahl von LED-Elementen umfassen, die einzeln individuelle Stromversorgungsanschlüsse aufweisen. Die LED-Elemente der Vielzahl von LED-Elementen können in verschiedene Richtungen ausgerichtet sein, um einen in verschiedene Richtungen ausgerichteten Abstrahlkegel vorzusehen, um so individuell gemäß dem erfindungsgemäßen Verfahren betrieben zu werden, wenn in der Abstrahlrichtung der LED-Elemente ein lichtempfindliches Objekt bzw. ein kritisches Objekt vorliegt. Ferner kann eine Vielzahl von LED-Elementen vorgesehen sein, die gemäß ihrer Ausrichtung gruppiert sind. Gruppierung bedeutet hierbei, dass LED-Elemente einer Gruppe einen gemeinsamen Stromversorgungsanschluss aufweisen, und verschiedene Gruppen verschiedene Stromversorgungsanschlüsse aufweisen. Dadurch hat jede Gruppe einen individuellen Stromversorgungsanschluss, wobei jede Gruppe einer bestimmten Ausrichtung zugeordnet ist. Dadurch können die Gruppen von LED-Elementen individuell und einzeln mit elektrischem Strom versorgt werden über eine Verbindung mit dem Taktgenerator oder über eine Verbindung mit einem Stromkreis, der von dem Taktgenerator gesteuert wird.

Gemäß einer besonderen Ausführungsform umfasst die mindestens eine Fahrzeug-Lichtquelle mindestens zwei LED-Scheinwerfer, wobei jeder LED-Scheinwerfer eine Vielzahl von LEDs umfasst, welche in einer gemeinsamen Halterung befestigt sind und in einer spezifischen Richtung ausgerichtet sind. Die LEDs können entlang eines Verlaufs angeordnet sein, der einem Parabolspiegel entspricht, wobei jede LED eine Linse umfasst, die zusammen mit dem Licht erzeugenden Kristall in der LED eine optische Achse vorsieht, die zusammen mit den anderen optischen Achsen der LEDs des LED-Scheinwerfers in einer Richtung ausgerichtet sind. Die Linse jeder LED wird vorgesehen durch eine lichtdurchlässige, gegossene Verkapselung der LED, die sowohl ein Gehäuse als auch eine Linse für einen Licht erzeugenden Kristall einteilig ausbildet. Neben einer Halterung, die mehrere LEDs in Form eines Parabolspiegels anordnet, können die LEDs auch in einer Ebene vorgesehen sein und gegebenenfalls auf einen gemeinsamen Fokussierpunkt ausgerichtet sein.

### Kurze Beschreibung der Zeichnungen

- Die Figur 1 zeigt: eine erfindungsgemäße Vorrichtung mit drei Fahrzeug-Lichtquellen; und
- Die Figur 2 zeigt: ein Zeitverlaufdiagramm der Intensität einer erfindungsgemäß betriebenen Fahrzeug-Lichtquelle.

### Detaillierte Beschreibung der Zeichnungen

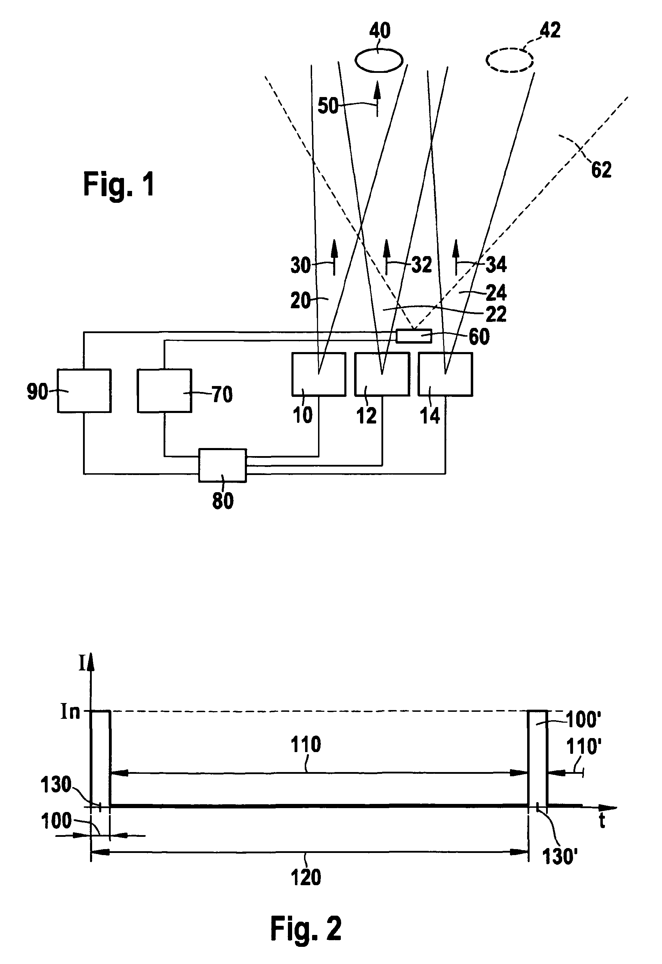

Die Figur 1 zeigt eine erfindungsgemäße Vorrichtung mit drei Fahrzeug-Lichtquellen, 10, 12, 14, die jeweils in einem vordefinierten Lichtkegel 20, 22, 24, Licht abstrahlen. Die Ausrichtung der Lichtkegel wird durch eine jeweilige Richtung 30, 32, 34 wiedergegeben.

Ein erstes Objekt 40, mit durchgezogener Linie dargestellt, befindet sich in dem Lichtkegel 20, 22 der Lichtquellen 10, 12. Von den Lichtquellen 10 und 12 aus gesehen befindet sich das Objekt 40 in einer kritischen Richtung 50. Die Richtung 50 entspricht den Richtungen 30, 32 der Lichtquellen 10, 12. Werden die Lichtquellen 10, 12 mit hoher Intensität betrieben, so wird das Objekt 40, beispielsweise ein Fußgänger oder ein entgegenkommendes Fahrzeug, durch die hohe Intensität geblendet.

Daher werden die Lichtquellen 10, 12, deren Ausrichtung 30, 32 in der kritischen Richtung 50 liegt, in der sich das Objekt 40 befindet, mit dem erfindungsgemäßen Verfahren betrieben, so dass die Lichtquellen 10, 12 eine durch Taktung verringerte zeitlich gemittelte Intensität abgeben. Durch Trägheit des Objekts 40 wird dieses nicht geblendet, obwohl während AN-Perioden die Lichtquellen 10, 12 Licht mit hoher Intensität abgeben. Während das Objekt 40 in den Ausrichtungen 30, 32 der Lichtquellen 10, 12 liegt und diese mit dem erfindungsgemäßen Verfahren zur Reduktion der gemittelten Intensität betrieben werden, sendet Lichtquelle 14 einen Lichtkegel 24 in eine Richtung 34 aus, die nicht in der kritischen Richtung 50 des Objekts 40 liegt. Daher kann die Lichtquelle 14 durchgehend betrieben werden mit einer hohen (Momentan-) Intensität), die der gemittelten Intensität entspricht. Mit anderen Worten ist das Tastverhältnis der Stromversorgung der Lichtquelle 14 ungefähr 100 %. Während die Ausrichtungen 30, 32, 34 durch die Befestigung der Lichtquellen 10-14 definiert sind, wird die kritische Richtung 50, in der das Objekt 40 liegt, von der Bilderfassungsvorrichtung 60 und einer daran angeschlossenen Objekterkennungsvorrichtung 70 erfasst. Der Erfassungskegel der Bildaufnahmevorrichtung 60 umfasst den bzw. die Ausleuchtungskegel 20-24 der Lichtquellen 10-14 im wesentlichen vollständig. Ein von der Bildaufnahmevorrichtung 60 erfasstes Bild wird über eine Verbindung an die Objekterkennungsvorrichtung 70 weitergegeben, die die kritische Richtung 50 ermittelt. Gemäß dieser Richtung werden die Lichtquellen 10, 12, 14 von einem Taktgenerator 80 der Vorrichtung angesteuert, so dass die Lichtquellen 10, 12, die in die Richtung 50 abstrahlen, erfindungsgemäß betrieben werden, wobei die Lichtquelle 14 von dem Taktgenerator 80 derart angestrahlt wird, dass diese durchgehend Licht mit kontinuierlicher Intensität erzeugt.

Darüber hinaus umfasst die erfindungsgemäße Vorrichtung eine Synchronisiervorrichtung 90, die mit der Bilderfassungsvorrichtung bzw. mit einem Auslöseeingang der Bilderfassungsvorrichtung 60 verbunden ist. Dadurch kann die Synchronisiervorrichtung 90 ein Signal an die Bildaufnahmevorrichtung 60 abgeben, um den Zeitpunkt der Bilderfassung der Bildaufnahmevorrichtung 60 zu steuern. Die Synchronisiervorrichtung 90 ist zudem mit dem Taktgenerator 80 verbunden, von dem die Synchronisiervorrichtung 90 ein Zeitsignal erhält, das die AN-Periode wiedergibt. Beispielsweise kann eine ansteigende Flanke des Taktgenerators 80 die Synchronisiervorrichtung 90 dazu veranlassen, ebenso eine ansteigende Flanke an den Auslöseeingang der Bilderfassungsvorrichtung 60 abzugeben, die daraufhin ein Bild erfasst. In diesem Beispiel dient der Taktgenerator 80 als Synchronisierungs-Mastereinheit. Alternativ kann auch die Synchronisiervorrichtung als Mastereinheit fungieren, indem diese ein Taktsignal gemäß einem Taktgenerator erzeugt, und dieses Signal über die jeweiligen Verbindungen an die Bildaufnahmevorrichtung 60 und an den Taktgenerator 80 abgibt. Gemäß einer weiteren Alternative kann die Bildaufnahmevorrichtung 60 als Mastereinheit fungieren, indem diese ein Signal erstellt, das über die Synchronisiervorrichtung 90 an den Taktgenerator 80 weitergegeben wird, der daraufhin die Lichtquellen 10, 12 gemäß der AN-Periode ansteuert. Wenn Taktgenerator 80 oder Bildaufnahmevorrichtung 60 als Mastereinheit fungieren, dann kann die Synchronisiervorrichtung 90 als einfache Datenübertragungsverbindung für ein Trägersignal vorgesehen werden.

Zu einem anderen Zeitpunkt bzw. in einer anderen Verkehrssituation kann kein Objekt 40 vorliegen, sondern dazu alternativ ein Objekt 42, gestrichelt dargestellt, das nur in dem Ausleuchtungskegel 24 der Lichtquelle 14 vorliegt, und das nicht in der Richtung 30, 32 der Lichtquellen 10, 12 liegt. In diesem Fall erfasst die Bildaufnahmevorrichtung 60 das Objekt 42 (inklusive der gesamten Verkehrsumgebung), woraufhin die Objekterkennungsvorrichtung 70 das Objekt 42 und somit dessen Richtung ermittelt und dadurch den Taktgenerator 80 so ansteuert, dass die Lichtquelle 14, welche auf das Objekt 42 gerichtet ist, erfindungsgemäß betrieben wird und die nicht auf das Objekt gerichteten Lichtquellen 10, 12 im Gegensatz hierzu mit kontinuierlicher Intensität betrieben werden.

Gemäß einer weiteren Verkehrssituation können beide Objekte 40, 42 vorgesehen sein, wobei dann die Objekterkennungsvorrichtung 70 erfasst, dass Objekte in allen Ausleuchtungskegeln 20, 24 und somit in allen Ausrichtungen 30, 34 aller Lichtquellen 10, 14, liegen. In diesem Fall erzeugt der Taktgenerator 80 für alle Lichtquellen 10, 14 ein getaktetes Signal, um die Lichtquellen 10-14 gemäß dem erfindungsgemäßen Verfahren mit geringer Durchschnittsintensität zu betreiben.

Werden eine oder werden alle Lichtquellen 10-14 mit geringerer Durchschnittsintensität betrieben, dann erfasst die Bildaufnahmevorrichtung 60 vorzugsweise während der AN-Periode oder auch nur während der AN-Periode ein Bild gemäß der Erfassungsbreite 62 der Bildaufnahmevorrichtung, die in ihrer Breite die Ausleuchtungskegel 20-24 der Lichtquellen 10-14 umfasst.

Die Figur 2 zeigt die Intensität einer erfindungsgemäß betriebenen Lichtquelle anhand eines Zeitverlaufdiagramms. Die Intensität I ist auf der vertikalen Achse aufgetragen, wohingegen der Zeitverlauf t in der horizontalen Achse aufgetragen ist. Während der AN-Periode 100, die sich wiederholt, erzeugt die betreffende Lichtquelle eine Normintensität In, die einer Normleistung der Lichtquelle entspricht. Auf die AN-Periode folgt eine AUS-Periode 110, in der die Intensität im Wesentlichen Null beträgt. Auf die AUS-Periode 110 folgt eine weitere AN-Periode 100', während der die Lichtquelle die volle Intensität In abstrahlt. Auf die AN-Periode folgt eine weitere AUS-Periode 110'. Die AN-Perioden (und somit auch die AUS-Perioden) wiederholen sich gemäß einer Wiederholdauer 120. In den AN-Perioden befinden sich die Aufnahmezeitpunkte 130, 130', zu denen die Bildaufnahmevorrichtung ein Bild der Verkehrsumgebung aufnimmt. Die Zeitpunkte der Bildaufnahme 130, 130' sind mit den AN-Perioden synchronisiert und liegen innerhalb der AN-Periode, vorzugsweise, um eine vorbestimmte Zeitdauer verzögert zu der ansteigenden Flanke der AN-Periode.

In dem in Figur 2 dargestellten Beispiel dauert die AN-Periode 1 ms, die AUS-Periode 110 29 ms und die Wiederholdauer 120 somit 30 ms (AN-Periode + AUS-Periode). Es ergibt sich somit eine Wiederholfrequenz von ca. 33 Hz bei einem Tastverhältnis gleich dem Verhältnis AN-Periode zu Summe aus AN-Periode und AUS-Periode = 1 ms : 30 ms = 1/30. Die gemittelte Intensität beträgt somit 1/30 In bzw. ca. 3 % von In.

Wird eine Veränderung der Helligkeit erwünscht, so kann dies durch Verlängerung der AN-Periode zu Lasten der AUS-Periode geschehen, wobei die Wiederholfrequenz vorzugsweise konstant bleibt. Die Wiederholfrequenz liegt vorzugsweise über einer Flackerfrequenz, ab der das menschliche Auge eine Intensitätsveränderung als flackernd störend wahrnimmt.

## Patentansprüche

1. Verfahren zur Fahrzeug gestützten Beleuchtung von Verkehrsumgebungen, umfassend: Erzeugen von Licht mittels mindestens einer Lichtquelle (10-14), das von einem Fahrzeug in eine Verkehrsumgebung mit einer zur Blendung des menschlichen Auges geeigneten Momentanintensität eingestrahlt wird, und Erfassen von kritischen Objekten (40, 42) in der Verkehrsumgebung wobei beim Erzeugen des Lichts die zeitlich gemittelte Intensität zur Vermeidung der Blendung des menschlichen Auges verringert wird, wenn ein kritisches Objekt erfasst wird durch Einstrahlen des Lichts unterbrochen in die Verkehrsumgebung gemäß AN-Perioden (100) und AUS-Perioden (110), und in einer AUS-Periode von der Lichtquelle kein Licht in die Verkehrsumgebung eingestrahlt wird, während in einer AN-Periode das Licht im Wesentlichen in die selbe Verkehrsumgebung eingestrahlt wird, **dadurch gekennzeichnet dass** ein Aufnehmen eines Bildes der Verkehrsumgebung während einer der AN-Perioden (100) geschient, wobei das Aufnehmen des Bildes mit oder innerhalb der AN-Periode (100) und mit oder innerhalb derselben AN-Periode (100) endet.

2. Verfahren nach Anspruch 1, wobei das Licht über die AN- und AUS-Perioden (100, 110) mit einem Intensitäts-Mittelwert abgestrahlt wird, der nicht mehr als 10 %, 5 %, 2 %, 1 %, 1‰, 0.1‰ oder 0.001‰ des Intensitäts-Mittelwert während einer AN-Periode (100) beträgt, oder wobei das Erzeugen von Licht umfasst: Betreiben einer elektrischen Lichtquelle getaktet gemäß einem Rechtecksignal, das die AN-Periode (100) und die AUS-Periode (110) definiert, und dessen Tastverhältnis nicht größer als 10 %, 5 %, 2 %, 1 %, 1 ‰ 0.1 ‰ oder 0.001 ‰ ist.

3. Verfahren nach einem der vorangehenden Ansprüche, wobei die AN-Periode (100) nicht länger als 100 ms, 50 ms, 20 ms, 10 ms, 5 ms, 1 ms, 200µs, 100 µs, 50µs oder 30 µs ist und die AUS-Periode (110) ein Vielfaches N der AN-Periode (100) beträgt, mit N ≥ 10, N ≥ 20, N ≥ 50, N ≥ 100, N ≥ 1000, N ≥ 10000 oder N ≥ 100000.

4. Verfahren nach einem der vorangehenden Ansprüche, wobei in der AUS-Periode (110) mindestens eine erste der Lichtquellen (10, 12), die in eine bestimmte Richtung ausgerichtet ist, kein Licht erzeugt, während in der AUS-Periode (110) mindestes eine dazu verschiedene zweite Lichtquelle (14), die in andere Richtungen ausgerichtet ist, Licht erzeugt, und in der AN-Periode (100) sowohl die mindestens eine erste als auch die mindestens eine zweite Lichtquelle (10-14) Licht erzeugen.

5. Verfahren nach Anspruch 4, ferner umfassend: Erfassen einer kritischen Richtung (30, 32), in der ein lichtempfindliches Objekt (40) in der Verkehrsumgebung vorliegt; Zuordnen mindestens einer Lichtquelle (10, 12), die in der kritischen Richtung (30, 32) liegt; und, während der AUS-Periode (110), Ausschalten der mindestens einen Lichtquelle (10, 12), die in der kritischen Richtung (30, 32) liegt, wobei andere Lichtquellen (14), die nicht in die kritischen Richtung (34) ausgerichtet sind, während der AUS-Periode (110) eingeschaltet sind.

6. Vorrichtung zur Fahrzeug gestützten Beleuchtung von Verkehrsumgebungen, umfassend: mindestens eine Fahrzeug-Lichtquelle (10, 14), die zur Abstrahlung von Licht mit einer zur Blendung des menschlichen Auges geeigneten Momentanintensität eingerichtet ist, wobei die mindestens eine Fahrzeug-Lichtquelle (10-14) in eine Verkehrsumgebung gerichtet ist, mindestens einen Taktgenerator (80), der die Fahrzeug-Lichtquelle (10-14) versorgt, wobei der Taktgenerator zur Verringerung der Intensität zur Vermeidung der Blendung des menschlichen Auges die Fahrzeug-Lichtquelle unterbrochen gemäß einer AN-Periode (100) und einer AUS-Periode (110) mit elektrischem Strom versorgt; eine Objekterkennungsvorrichtung (70) zur Erfassung eines kritischen Objekts (40) und eine Bildaufnahmevorrichtung (60), wobei der Taktgenerator (80) eingerichtet ist, die mindestens eine Fahrzeug-Lichtquelle (10-14) unterbrochen zu versorgen, wenn ein kritisches Objekt (40) erfasst wurde, **dadurch gekennzeichnet, dass** die Bildaufnahmevorrichtung (60), die mittelbar oder unmittelbar mit dem Taktgenerator (80) verbunden ist und eingerichtet ist, Bilder der Verkehrsumgebung während der AN-Periode (100) aufzunehmen, und die Dauer der AN-Periode im Vergleich zur Trägheit des menschlichen Auges kurz genug ist, um eine Blendung zu vermeiden.

7. Vorrichtung nach Anspruch 6, ferner umfassend: eine Synchronisiervorrichtung (90), die eine Bildaufnahme-Triggersignal mit dem Beginn der AN-Periode oder um eine vorbestimmte Verzögerung dazu versetzt an die daran angeschlossene Bildaufnahmevorrichtung (60) abgibt, wobei die Synchronisiervorrichtung (90) zur Erfassung der AN-Periode (100) mit dem Taktgenerator (80) verbunden ist.

8. Vorrichtung nach Anspruch 6 oder 7, wobei die Objekterkennungsvorrichtung (70) mit der Bildaufnahmevorrichtung (60) verbunden ist, und die eingerichtet ist, lichtempfindliche Objekte als kritische Objekte in dem Bild zu erfassen und einer kritischen Richtung (30, 32) zuzuordnen, wobei die Vorrichtung eine Vielzahl von in verschiedene Richtungen (30-34) ausgerichtete Fahrzeug-Lichtquellen (10-14) umfasst, und der Taktgenerator (80) eingerichtet ist, diejenige oder diejenigen Fahrzeug-Lichtquellen (10, 12) welche in die kritische Richtung oder Richtungen (30, 32) ausgerichtet sind, während der AUS-Periode (110) nicht mit Strom zu versorgen, während diejenige oder diejenigen Fahrzeug-Lichtquellen (14), welche nicht in die kritische Richtung ausgerichtet sind, während der AUS-Periode (110) mit Strom versorgen.

9. Vorrichtung nach einem der Ansprüche 6 - 8, wobei die mindestens eine Fahrzeug-Lichtquelle (10-14) umfasst: einen LED-Scheinwerfer mit genau einem Stromversorgungsanschluss oder mit einer Vielzahl von LED-Elementen, die einzeln oder gemäß ihrer Ausrichtung gruppiert individuelle Stromversorgungsanschlüsse aufweisen, um einzeln mit elektrischem Strom versorgt zu werden.

## Claims

1. Method for the vehicle-assisted illumination of traffic environments, comprising: generating light by means of at least one light source (10-14), said light being radiated from a vehicle into a traffic environment with an instantaneous intensity suitable for dazzling the human eye, and detecting critical objects (40, 42), in the traffic environment wherein when generating the light, the temporally averaged intensity is reduced in order to avoid dazzling the human eye if a critical object is detected by the light being radiated into the traffic environment in an interrupted manner in accordance with ON periods (100) and OFF periods (110), and no light is radiated into the traffic environment by the light source in an OFF period, while in an ON period the light is radiated substantially into the same traffic environment, **characterized in that** recording of an image of the traffic environment takes place during one of the ON periods (100), wherein the recording of the image ends with or within the ON period (100) and with or within the same ON period (100).

2. Method according to Claim 1, wherein the light, by means of the ON and OFF periods (100, 110), is emitted with an average intensity value which is not more than 10%, 5%, 2%, 1%, 1‰, 0.1‰ or 0.001‰ of the average intensity value during an ON period (100) or wherein generating light comprises: operating an electrical light source in a clocked manner in accordance with a rectangular signal which defines the ON period (100) and the OFF period (110) and the duty ratio of which is not greater than 10%, 5%, 2%, 1%, 1‰, 0.1‰ or 0.001‰.

3. Method according to either of the preceding claims, wherein the ON period (100) in not longer than 100 ms, 50 ms, 20 ms, 10 ms, 5 ms, 1 ms, 200 µs, 100 µs, 50 µs or 30 µs and the OFF period (110) is a multiple N of the ON period (100), where N ≥ 10, N ≥ 20, N ≥ 50, N ≥ 100, N ≥ 1000, N ≥ 10 000 or N ≥ 100 000.

4. Method according to any of the preceding claims, wherein at least one first of the light sources (10, 12), which is oriented in a specific direction, generates no light in the OFF period (110), while at least one second light source (14) which is different therefrom and which is oriented in other directions generates light in the OFF period (110), and both the at least one first and the at least one second light source (10-14) generate light in the ON period (100).

5. Method according to Claim 4, furthermore comprising: detecting a critical direction (30, 32), in which a light-sensitive object (40) is present in the traffic environment; assigning at least one light source (10, 12) which lies in the critical direction (30, 32); and, during the OFF period (110), switching off the at least one light source (10, 12) which lies in the critical direction (30, 32), wherein other light sources (14), which are not oriented in the critical direction (34) are switched on during the OFF period (110).

6. Device for the vehicle-assisted illumination of traffic environments, comprising: at least one vehicle light source (10, 14), which is designed for emitting light with an instantaneous intensity suitable for dazzling the human eye, wherein the at least one vehicle light source (10-14) is directed into a traffic environment, at least one clock generator (80) which supplies the vehicle light source (10-14), wherein the clock generator, for reducing the intensity for avoiding the dazzle of the human eye, supplies the vehicle light source with electric current in an interrupted manner in accordance with an ON period (100) and an OFF period (110); an object recognition device (70) for detecting a critical object (40), and an image recording device (60), wherein the clock generator (80) is designed to supply the at least one vehicle light source (10-14) in an interrupted manner if a critical object (40) has been detected, **characterized in that** the image recording device (60), which is indirectly or directly connected to the clock generator (80) and is designed to record images of the traffic environment during the ON period (100), and the duration of the ON period, in comparison with the inertia of the human eye, is short enough to avoid dazzle.

7. Device according to Claim 6, furthermore comprising: a synchronizing device (90), which outputs to the image recording device (60) connected thereto an image recording trigger signal with the beginning of the ON period or in a manner offset by a predetermined delay with respect thereto, wherein the synchronizing device (90), for detecting the ON period (100), is connected to the clock generator (80).

8. Device according to Claim 6 or 7, wherein the object recognition device (70) is connected to the image recording device (60), and which is designed to detect light-sensitive objects as critical objects in the image and to assign them to a critical direction (30, 32), wherein the device comprises a multiplicity of vehicle light sources (10-14) oriented in different directions (30-34), and the clock generator (80) is designed such that that or those vehicle light sources (10, 12) oriented in the critical direction or directions (30-32) is/are not supplied with current during the OFF period (110), while that or those vehicle light sources (14) not oriented in the critical direction is/are supplied with current during the OFF period (110).

9. Device according to any of Claims 6-8, wherein the at least one vehicle light source (10-14) comprises: an LED headlight having exactly one current supply terminal, or having a multiplicity of LED elements which have individual current supply terminals individually or in a grouped manner in accordance with their orientation, in order to be supplied individually with electric current.

## Revendications

1. Procédé d'éclairage assisté d'un véhicule pour des environnements de circulation, comprenant : production de lumière au moyen d'au moins une source lumineuse (10 - 14), qui irradie l'environnement de circulation à partir d'un véhicule avec une intensité instantanée compatible avec l'éblouissement de l'oeil humain, et enregistrement d'objets critiques (40, 42) dans l'environnement de circulation, l'intensité moyennée en temps de la production de lumière étant réduite pour éviter l'éblouissement de l'oeil humain, lorsqu'un objet critique est enregistré, par interruption de l'irradiation de l'environnement de circulation selon des périodes ALLUMÉES (100) et ÉTEINTES (110), et avec une période ÉTEINTE pendant laquelle la source lumineuse n'irradie aucune lumière dans l'environnement de circulation, alors que pendant une période ALLUMÉE, la lumière irradie pour l'essentiel le même environnement de circulation, **caractérisé en ce que** la prise de vue d'une image de l'environnement de circulation ayant lieu pendant une période ALLUMÉE (100), la prise de vue de l'image commençant avec ou à l'intérieur de la période ALLUMÉE (100) et se terminant avec ou à l'intérieur de la même période ALLUMÉE (100).

2. Procédé selon la revendication 1, dans lequel la lumière est irradiée selon les périodes ALLUMÉES et ÉTEINTES (100, 110) avec une valeur moyenne de l'intensité ne valant pas plus de 10%, 5%, 2%, 1%, 1‰, 0,1‰ ou 0,001‰ de la valeur moyenne de l'intensité pendant une période ALLUMÉE (100), ou dans lequel la production de lumière comprend : utilisation cadencée d'une source lumineuse électrique selon un signal rectangulaire définissant la période ALLUMÉE (100) et la période ÉTEINTE (110), et dont le rapport cyclique n'est pas supérieur à 10%, 5%, 2%, 1%, 1‰, 0,1‰ ou 0,001‰.

3. Procédé selon une des revendications précédentes, dans lequel la période ALLUMÉE (100) ne dure pas plus de 100 ms, 50 ms, 20 ms, 10 ms, 5 ms, 1 ms, 200 µs, 100 µs, 50 µs, ou 30 µs et la période ÉTEINTE (110) valant un multiple N de la période ALLUMÉE (100) avec N ≥ 10, N ≥ 20, N ≥ 50, N ≥ 100, N ≥ 1000, N ≥ 10000, ou N ≥ 100000.

4. Procédé selon une des revendications précédentes, dans lequel dans la période ÉTEINTE (110), au moins une première des sources lumineuses (10, 12) dirigée dans une direction déterminée ne produit aucune lumière, alors que dans la période ÉTEINTE (110), au moins une deuxième source lumineuse différente (14), dirigée dans d'autres directions, produit de la lumière, et dans la période ALLUMÉE (100), au moins une première, de même aussi qu'au moins une deuxième source lumineuse (10 - 14) produisent de la lumière.

5. Procédé selon la revendication 4, comprenant de plus : enregistrement d'une direction critique (30, 32) dans laquelle un objet (40) sensible à la lumière existe dans l'environnement de circulation ; affectation d'au moins une source lumineuse (10, 12) située dans la direction critique (30, 32) ; et pendant la période ÉTEINTE (110), extinction d'au moins la source lumineuse (10, 12) située dans la direction critique (30, 32), d'autres sources lumineuses (14) qui ne sont pas orientées dans la direction critique (34) étant allumées pendant la période ÉTEINTE (110).

6. Dispositif d'éclairage assisté d'un véhicule pour des environnements de circulation, comprenant : au moins une source lumineuse de véhicule (10 - 14), installée pour irradier de la lumière avec une intensité instantanée compatible avec l'éblouissement de l'oeil humain, cette au moins une source lumineuse de véhicule (10 - 14) étant orientée dans un environnement de circulation, au moins un générateur de cadence (80) alimentant la source lumineuse de véhicule (10 - 14), le générateur de cadence alimentant la source lumineuse de véhicule en courant électrique discontinu selon une période ALLUMÉE (100) et une période ÉTEINTE (110) pour diminuer l'intensité pour éviter l'éblouissement de l'oeil humain, un dispositif de reconnaissance d'objets (70) pour l'enregistrement d'un objet critique (40) et un dispositif de prise de vues d'images (60), le générateur de cadence (80) étant installé pour alimenter cette au moins une source lumineuse de véhicule (10 - 14) de manière discontinue lorsqu'un objet critique (40) a été enregistré, **caractérisé en ce que** le dispositif de prise de vues d'images (60) est relié indirectement ou directement avec le générateur de cadence (80) et est installé pour prendre des images de l'environnement de circulation pendant la période ALLUMÉE (100), et la durée de la période ALLUMÉE en comparaison de la persistance de l'oeil humain est assez courte pour éviter un éblouissement.

7. Dispositif selon la revendication 6, comprenant de plus : un dispositif de synchronisation (90) qui délivre au dispositif de prise de vues d'images (60) qui lui est raccordé, un signal de déclenchement de la prise de vue d'une image avec le début de la période ALLUMÉE ou décalé en plus avec un retard prédéfini, le dispositif de synchronisation (90) étant relié au générateur de cadence (80) pour l'enregistrement de la période ALLUMÉE (100).

8. Dispositif selon la revendication 6 ou 7, dans lequel le dispositif de reconnaissance d'objets (70) est relié au dispositif de prise de vues d'images (60), et qui est installé pour enregistrer des objets sensibles à la lumière comme des objets critiques dans l'image et pour les affecter à une direction critique (30, 32), le dispositif comprenant une multitude de sources lumineuses de véhicule (10 - 14) orientées dans différentes directions (30 - 34), et le générateur de cadence (80) étant installé pour ne pas alimenter en courant la ou les sources lumineuses de véhicule (10, 12) orientées dans la ou dans les directions critiques (30, 32) pendant la période ÉTEINTE (110), alors qu'il alimente en courant la ou les sources lumineuses de véhicule (14) qui ne sont pas orientées dans la direction critique pendant la période ÉTEINTE (110).

9. Dispositif selon une des revendications 6 - 8, dans lequel cette au moins une source lumineuse de véhicule (10 - 14) comprend : un phare à LED avec exactement un raccordement d'alimentation en courant ou avec une multitude d'éléments LED qui comportent des raccordements en courant individuels ou groupés en fonction de leur orientation pour permettre leur alimentation individuelle en courant électrique.
